# EUROPÄISCHE PATENTSCHRIFT

(11) **EP 3 224 285 B1**
(45) Veröffentlichungstag und Bekanntmachung des Hinweises auf die Patenterteilung: **08.07.2020**
(21) Anmeldenummer: 15801698.0
(22) Anmeldetag: 11.11.2015
(51) Int. Cl.: C08F 8/32, C08F 8/44, C08F 222/02, C08F 222/04, C08F 210/14, C08F 220/18, C10L 1/236, C10L 10/14, C10L 10/18, C08F 222/06, C10L 10/16, C08F 4/34, C10L 1/14, C10L 1/16, C10L 1/196, C10L 1/197

(54) **COPOLYMERISAT UND SEINE VERWENDUNG ZUR VERMINDERUNG DER KRISTALLISATION VON PARAFFINKRISTALLEN IN KRAFTSTOFFEN**
COPOLYMER AND USE THEREOF FOR REDUCING CRYSTALLIZATION OF PARAFFIN CRYSTALS IN FUELS
COPOLYMÈRE ET SON UTILISATION POUR RÉDUIRE LA CRISTALLISATION DE CRISTAUX DE PARAFFINE DANS LES CARBURANTS

(30) Priorität: 27.11.2014 EP 14195177
(43) Veröffentlichungstag der Anmeldung: 04.10.2017
(73) Patentinhaber: BASF SE, 67056 Ludwigshafen am Rhein (DE)
(72) Erfinder: TROETSCH-SCHALLER, Irene, 67281 Bissersheim (DE); GARCIA CASTRO, Ivette, 67067 Ludwigshafen (DE); SCHROERS, Michael, 67098 Bad Duerkheim (DE); REBHOLZ, Uwe, 67678 Mehlingen (DE); REHBERGER, Hubert, 76761 Ruelzheim (DE); FAUL, Dieter, 67150 Niederkirchen (DE)
(74) Vertreter: BASF IP Association
(86) Internationale Anmeldenummer: PCT/EP2015/076317
(87) Internationale Veröffentlichungsnummer: WO 2016/083130

(56) Entgegenhaltungen:
- EP-A1- 2 535 396
- EP-A2- 0 606 055
- DE-T2- 60 016 804
- DE-T2- 60 016 804
- FR-A1- 2 592 888
- US-A- 4 511 369
- US-A- 4 526 950

## Beschreibung

Die vorliegende Erfindung betrifft ein Copolymerisat erhältlich durch Copolymerisation von
(A) mindestens einer ungesättigten Dicarbonsäure oder deren Derivate,
(B) mindestens einem α-Olefin mit von mindestens 6 bis zu einschließlich 20 Kohlenstoffatomen,
(C) mindestens eines C₃- bis C₂₀-Alkylesters der Acrylsäure oder Methacrylsäure oder einer Mischung solcher Alkylester und
(D) optional eines oder mehrerer weiterer copolymerisierbarer Monomere, die verschieden von den Monomeren (A), (B) und (C) sind,
gefolgt von der Umsetzung mit mindestens einem Dialkylamin (E), wobei es sich bei den beiden Alkylresten des mindestens einen Dialkylamins (E) unabhängig voneinander um mindestens 17 bis zu 30 Kohlenstoffatome aufweisende Alkylreste handelt.

Weiterhin betrifft die vorliegende Erfindung ein Verfahren zur Herstellung dieses Copolymerisates.

Weiterhin betrifft die vorliegende Erfindung die Verwendung dieses Copolymerisates zur Modifizierung der Kristallisation von Paraffinkristallen in Kraftstoffen.

Mitteldestillat-Kraftstoffe aus fossilem Ursprung, insbesondere Gasöle, Dieselöle oder leichte Heizöle, die aus Erdöl gewonnen werden, haben je nach Herkunft des Rohöls unterschiedliche Gehalte an Paraffinen. Bei tiefen Temperaturen kommt es am Trübungspunkt oder Cloud Point ("CP") zur Ausscheidung fester Paraffine. Es wird vermutet, daß bei weiterer Abkühlung die plättchenförmigen n-Paraffinkristalle eine Art von "Kartenhausstruktur" bilden und der Mitteldestillat-Kraftstoff stockt, obwohl sein überwiegender Teil noch flüssig ist. Durch die ausgefallenen n-Paraffine im Temperaturbereich zwischen Trübungspunkt (Cloud Point) und Pour Point ("PP") wird die Fließfähigkeit der Mitteldestillat-Kraftstoffe erheblich beeinträchtigt; die Paraffine verstopfen Filter und verursachen eine ungleichmäßige oder völlig unterbrochene Kraftstoffzufuhr zu den Verbrennungsaggregaten. Ähnliche Störungen treten bei leichten Heizölen auf.

Es ist seit langem bekannt, dass durch geeignete Zusätze das Kristallwachstum der n-Paraffine in Mitteldestillat-Kraftstoffen modifiziert werden kann. Gut wirksame Additive verhindern, dass Mitteldestillat-Kraftstoffe bei Temperaturen wenige Grade Celsius unterhalb der Temperatur, bei welcher die ersten Paraffinkristalle auskristallisieren, bereits fest werden. Statt dessen werden feine, gut kristallisierende, separate Paraffinkristalle gebildet, welche auch bei weiterer Absenkung der Temperatur die Filter in Kraftfahrzeugen und Heizungsanlagen passieren oder zumindest einen für den flüssigen Teil der Mitteldestillate durchlässigen Filterkuchen bilden, so dass ein störungsfreier Betrieb sichergestellt ist. Die Wirksamkeit der Fließverbesserer wird üblicherweise nach der europäischen Norm EN 116 indirekt durch Messung des Cold Filter Plugging Point ("CFPP") ausgedrückt. Als derartige Kaltfließverbesserer oder Middle Distillate Flow Improvers ("MDFI") werden beispielsweise schon seit langem Ethylen-Vinylcarboxylat-Copolymere, wie Ethylen-Vinylacetat-Copolymere ("EVA"), eingesetzt.
Die Problematik beim Kaltfließverhalten stellt sich bei Biobrennstoffölen, z.B. sogenanntem "Biodiesel", und Mischungen aus Mitteldestillat-Kraftstoffen und Biobrennstoffölen ähnlich dar. Hier können zur Verbesserung des Kaltfließverhaltens im Prinzip die gleichen Additive wie bei reinen Mitteldestillat-Kraftstoffen eingesetzt werden.
Ein Nachteil dieser Additive beim Einsatz in Mitteldestillat-Kraftstoffen liegt darin, dass die derart modifizierten Paraffinkristalle aufgrund ihrer gegenüber dem flüssigen Teil höheren Dichte dazu neigen, sich beim Lagern des Mitteldestillat-Kraftstoffes mehr und mehr am Boden des Kraftstoffbehälters, z.B. des Vorratstanks, abzusetzen. Dadurch bildet sich im oberen Behälterteil eine homogene paraffinarme Phase und am Boden eine zweiphasige paraffinreiche Schicht. Da sowohl in den Fahrzeugtanks als auch in Lager- oder Liefertanks der Mineralölhändler der Abzug des Kraftstoffes meist wenig oberhalb des Behälterbodens erfolgt, besteht die Gefahr, dass die hohe Konzentration an festen Paraffinen zu Verstopfungen von Filtern und Dosiereinrichtungen führt. Diese Gefahr wird um so größer, je weiter die Lagertemperatur die Ausscheidungstemperatur der Paraffine unterschreitet, da die ausgeschiedene Paraffinmenge mit sinkender Temperatur zunimmt. Insbesondere verstärken auch Anteile an Biodiesel diese unerwünschte Neigung des Mitteldestillat-Kraftstoffes zur Paraffinsedimentation. Durch den zusätzlichen Einsatz von Paraffindispergatoren oder Wax Anti-Settling Additiven ("WASA") können die geschilderten Probleme verringert werden.
Aus WO 95/07944 ist es bekannt, Copolymere aus einer monoethylenisch ungesättigten C₄-C₆-Dicarbonsäure oder deren Anhydrid, Oligomeren des Propens oder eines verzweigten 1-Olefins mit 4 bis 10 Kohlenstoffatomen sowie einer monoethylenisch ungesättigen Verbindung herzustellen und anschließend mit einer Aminkomponente umzusetzen. Die Produkte werden als Detergentien in Kraftstoffen eingesetzt.
Aus EP 1526167 A2 und EP 1857529 A1 ist bekannt, EVA-Copolymere im Gemisch mit Copolymeren aus Maleinsäureanhydrid und α-Olefinen mit 10 bis 20 C-Atomen, umgesetzt mit primären oder sekundären Aminen mit C₈- bis C₁₆-Alkylresten einzusetzen. Der Einbau der Amine erfolgt über Amid- oder Imidbindungen. Die Länge der Reste von α-Olefin und Alkylresten des Amins müssen dabei ein bestimmtes Verhältnis erfüllen, um als Kaltfließverbesserer für Brennstofföle geeignet zu sein.

Es bestand die Aufgabe, Produkte zur Verfügung zu stellen, welche diese unerwünschte Neigung von Mitteldestillat-Kraftstoffen zur Paraffinsedimentation vermindern.

Die Aufgabe wird erfindungsgemäß durch das eingangs genannte Copolymerisat aus den Komponenten (A), (B), (C) und optional (D) sowie (E) gelöst.

Bei dem Monomer (A) handelt es sich um mindestens eine, bevorzugt ein bis drei, besonders bevorzugt ein oder zwei und ganz besonders bevorzugt genau eine ungesättigten Dicarbonsäure oder deren Derivate.

Unter Derivaten werden dabei verstanden
- die betreffenden Anhydride in monomerer oder auch polymerer Form,
- Mono- oder Dialkylester, bevorzugt Mono- oder Di-C₁-C₄-alkylester, besonders bevorzugt Mono- oder Dimethylester oder die entsprechenden Mono- oder Diethylester,
- gemischte Ester, bevorzugt gemischte Ester mit unterschiedlichen C₁-C₄-Alkylkomponenten, besonders bevorzugt gemischte Methylethylester, sowie
- Mono- und Diamide sowie Imide, die durch Umsetzung der ungesättigten Dicarbonsäure mit primären Aminen oder sekundären Aminen, bevorzugt C₁-C₃₀-Alkylaminen oder Di-C₁-C₃₀-Alkylaminen erhältlich sind.

Bevorzugt handelt es sich bei den Derivaten um Anhydride in monomerer Form oder Di-C₁-C₄-alkylester, besonders bevorzugt um Anhydride in monomerer Form.

In einer weiteren bevorzugte Ausführungsform handelt es sich bei den Derivaten um Di- oder Monoamide, bevorzugt Monoamide, welche durch Umsetzung der ungesättigten Dicarbonsäure mit Dialkylaminen (E) erhältlich sind, deren Alkylrest unabhängig voneinander mindestens 17 bis zu 30 Kohlenstoffatome aufweisen.

Unter C₁-C₄-Alkyl wird im Rahmen dieser Schrift Methyl, Ethyl, *iso*-Propyl, n-Propyl, n-Butyl, *iso-*Butyl, *sek*-Butyl und *tert*-Butyl verstanden, bevorzugt Methyl und Ethyl, besonders bevorzugt Methyl.

Bei der ungesättigten Dicarbonsäure handelt es sich um solche Dicarbonsäuren bzw. deren Derivate, bei denen beide Carboxylgruppen mit der ethylenisch ungesättigten Doppelbindung konjugiert sind.

Beispiele dafür sind Maleinsäure, Fumarsäure, 2-Methylmaleinsäure, 2,3-Dimethylmaleinsäure, 2-Methylfumarsäure, 2,3-Dimethylfumarsäure, Methylenmalonsäure und Tetrahydrophthalsäure, bevorzugt um Maleinsäure und Fumarsäure und besonders bevorzugt um Maleinsäure und deren Derivate.

Insbesondere handelt es sich bei dem Monomer (A) um Maleinsäureanhydrid.

Bei dem Monomer (B) handelt es sich um mindestens ein, bevorzugt ein bis vier, besonders bevorzugt ein bis drei, ganz besonders bevorzugt ein oder zwei und insbesondere genau ein α-Olefin mit von mindestens 6 bis zu einschließlich 20 Kohlenstoffatomen. Die α-Olefine (B) weisen bevorzugt mindestens 8, besonders bevorzugt mindestens 10 Kohlenstoffatome auf. Bevorzugt weisen die α-Olefine (B) bis einschließlich 18, besonders bevorzugt bis einschließlich 16 und ganz besonders bevorzugt bis einschließlich 14 Kohlenstoffatome auf.

Handelt es sich bei dem Monomeren (B) um ein Gemisch von verschiedenen Olefinen, so ist bei der Bestimmung der Anzahl der Kohlenstoffatome auf das statistische Mittel der Anzahlen der Kohlenstoffatome der im Gemisch enthaltenen Olefine abzustellen. Demzufolge weist ein Gemisch aus 50 mol% C₂₂-Olefin und 50 mol% C₁₆-Olefin im statistischen Mittel 19 Kohlenstoffatome auf.

In einer bevorzugten Ausführungsform weisen jedoch im wesentlichen alle im Gemisch befindlichen α-Olefine die oben angegebene Anzahl von Kohlenstoffatomen auf, bevorzugt mindestens 90 mol%, besonders bevorzugt mindestens 95 mol% und ganz besonders bevorzugt mindestens 98 mol%.

Bevorzugt kann es sich bei den α-Olefinen um lineare oder verzweigte, bevorzugt lineare 1-Alkene handeln.

Beispiele dafür sind 1-Hexen, 1-Hepten, 1-Octen, 1-Nonen, 1-Decen, 1-Undecen, 1-Dodecen, 1-Tridecen, 1-Tetradecen, 1-Pentadecen, 1-Hexadecen, 1-Heptadecen, 1- Octadecen, 1-Nonadecen und 1-Eicosen, wovon 1-Decen, 1-Dodecen, 1-Tetradecen und 1-Hexadecen bevorzugt werden und 1-Dodecen besonders bevorzugt ist.

Bei dem Monomer (C) handelt es sich um mindestens einen, bevorzugt ein bis vier, besonders bevorzugt ein bis drei, ganz besonders bevorzugt ein oder zwei und insbesondere genau einen C₃-bis C₂₀-Alkylester der Acrylsäure oder Methacrylsäure, bevorzugt der Acrylsäure, oder einer Mischung solcher Alkylester. Dabei kann der Alkylrest jeweils geradkettig oder verzweigt sein. Als C₃- bis C₂₀-Alkylester der Acrylsäure oder Methacrylsäure, bevorzugt der Acrylsäure, für die Komponente (C) eignen sich vorzugsweise die Ester der Acryl- und Methacrylsäure mit C₃- bis C₁₈-Alkanolen, bevorzugt mit C₄- bis C₁₈-Alkanolen, besonders bevorzugt mit C₈- bis C₁₆-Alkanolen, ganz besonders bevorzugt C₁₀- bis C₁₄-Alkanolen und insbesondere C₁₂-Alkanolen, beispielsweise mit n-Propanol, iso-Propanol, n-Butanol, sec.-Butanol, Isobutanol, tert.-Butanol, n-Pentanol, tert.-Pentanol, n-Hexanol, n-Heptanol, n-Octanol, 2-Ethylhexanol, n-Nonanol, Isononanol, n-Decanol, 2-Propylheptanol, n-Undecanol, iso-Undecanol, n-Dodecanol, n-Tridecanol, Isotridecanol, 3,3,5,5,7-Pentamethyloctanol, n-Tetradecanol, n-Pentadecanol, n-Hexadecanol, n-Heptadecanol, iso-Heptadecanol, 3,3,5,5,7,7,9-Heptamethyldecanol, n-Octadecanol und n-Eicosanol. Ferner denkbar sind Gemische von C₁₇-Alkanolen, wie sie beschrieben sind in WO 2009/124979.

In einer Ausführungsform handelt es sich bei den Alkanolen um verzeigte C₁₃- oder C₁₇-Alkanole oder deren Gemische, die einen mittleren Verzweigungsgrad gemäß Iso-Index von 1,2 bis 3,0, insbesondere von 1,7 bis 2,5 aufweisen.

Derartige Alkanole oder deren Mischungen sind erhältlich durch Oligomerisierung von C₄-Kohlenwasserstoffströmen, insbesondere homogen- oder heterogenkatalysierte Oligomerisierung von technischen C₄-Strömen aus 10 bis 90 Gew.-% Butan, 10 bis 90 Gew.-% linearen Butenen (Buten-1, cis- und trans-Buten-2) sowie 1 bis 5 Gew.-% Isobuten, beispielsweise von Raffinat II. Ein hierfür typischer Heterogenkatalysator enthält Nickel. Die Oligomerisierung wird meist bei Temperaturen von 30 bis 280°C und Drücken von 10 bis 300 bar durchgeführt. Derartige Oligomerisierungsreaktionen sind beispielsweise in der WO 99/25668 beschrieben. Die Oligomerisierungprodukte werden anschließend hydroformyliert und hydriert und ergeben so die genannten Alkanole bzw. Alkanolgemische.

Bevorzugt handelt es sich bei der Komponente (C) um n-Decyl(meth)acrylat, 2-Propylheptyl(meth)acrylat, n-Undecyl(meth)acrylat, n-Dodecyl(meth)acrylat, n-Tridecyl(meth)acrylat, Isotridecyl(meth)acrylat oder n-Tetradecyl(meth)acrylat, besonders bevorzugt um n-Dodecyl(meth)acrylat oder n-Tetradecyl(meth)acrylat oder deren Gemische und ganz besonders bevorzugt um die jeweiligen Acrylate.

Die optionalen weiteren Monomere (D), bei denen es sich um andere als die Monomere (A), (B) und (C) handelt, sind bevorzugt ausgewählt aus der Gruppe bestehend aus cycloaliphatischen (Meth)acrylaten (D1), (Meth)acrylaten von Polyalkylenglykolmonoalkylethern (D2), Vinylalkanoaten (D3), Allylverbindungen (D4), Vinylethern (D5), N-Vinyllactamen (D6), N-Vinylimidazolen (D7), ethylenisch ungesättigten Aromaten (D8), Schwefeldioxid (D9) und ethylenisch ungesättigte Nitrile (D10).

Dabei können mindestens ein Monomeres (D), bevorzugt ein bis vier, besonders bevorzugt ein bis drei, ganz besonders bevorzugt ein oder zwei und insbesondere genau ein Monomeres (D) optional eingesetzt werden.

Beispiele für cycloaliphatische (Meth)acrylate (D1) sind (Meth)acrylate von Alkoholen, die mindestens ein, bevorzugt ein oder zwei und besonders bevorzugt ein cycloaliphatisches Ringsystem aufweisen und von 5 bis 20 Kohlenstoffatome aufweisen. Bevorzugte Monomere sind Cyclopentyl(meth)acrylat, Cyclohexyl(meth)acrylat und Norbornyl(meth)acrylat, besonders bevorzugt sind die jeweiligen Acrylate.

(Meth)acrylaten von Polyalkylenglykolmonoalkylethern (D2) sind bevorzugt (Meth)acrylsäureester von Mono-C₁-C₄-Alkylethern von Poly-1,2-propylenglykol mit einer Molmasse zwischen 134 und 1178 oder Polyethylenglykol mit einer Molmasse zwischen 106 und 898, sowie Ethylenglykol mono-C₁-C₄-Alkylether oder Propylenglykol mono-C₁-C₄-Alkylether. Besonders bevorzugt sind Ethylenglykolmonomethylether, Ethylenglykolmonoethylether, Ethylenglykolmono-n-butylether, 1,2-Propandiolmonomethylether, 1,2-Propandiolmonoethylether, Diethylenglykolmonomethylether, Diethylenglykolmonoethylether und Diethylenglykolmono-n-butylether.

Unter den Vinylalkanoaten (D3) sind bevorzugt Vinylacetat, Vinylpropionat, Vinylbutanoat, Vinylpentanoat, Vinylhexanoat, Vinyl-2-ethylhexanoat, Vinyloctanoat, Vinylester der Neodecansäure ("Veova"), Vinyldecanoat, Vinyldodecanoat, Vinyltridecanoat, Vinylisotridecanoat, Vinyltetradecanoat, Vinylpentadecanoat, Vinylhexadecanoat und Vinyloctadecanoat, besonders bevorzugt Vinylacetat, Vinylpropionat, Vinylhexanoat, Vinyl-2-ethylhexanoat, und Vinylester der Neodecansäure ("Veova"), ganz besonders bevorzugt Vinylacetat.

Unter den Allylverbindungen (D4) bevorzugt sind Allylalkohol, Allylalkohol-C₁-C₄-Alkylether und Allylalkanoate solcher Carbonsäuren, wie sie unter (D3) aufgeführt sind.

Unter den Vinylethern (D5) bevorzugt sind Cyclohexylvinylether, Isopropylvinylether, Isobutylvinylether, tert.-Butylvinylether, n-Butyl-vinylether, Octylvinylether, Decylvinylether, Dodecylvinylether, Tetradecylvinylether, Hexadecylvinylether und Octadecylvinylether N-Vinyllactamen (D6) sind bevorzugt N-Vinylcaprolactam und N-Vinylpyrrolidon.

Unter den N-Vinylimidazolen (D7) ist N-Vinylimidazol bevorzugt.

Unter den ethylenisch ungesättigten Aromaten (D8) sind Styrol und 1-Methylstyrol bevorzugt, besonders bevorzugt Styrol.

Unter den ethylenisch ungesättigten Nitrilen (D10) sind Acrylnitril und Methacrylnitril bevorzugt, besonders bevorzugt ist Acrylnitril.

Unter den optional einsetzbaren Monomeren (D) bevorzugt sind (D1), (D3), (D5) und/oder (D8), besonders bevorzugt sind (D1), (D3) und/oder (D5), ganz besonders bevorzugt sind (D1) und/oder (D3).

Die Stöchiometrie der Monomeren (A), (B), (C) und optional (D) wird bevorzugt so gewählt, daß die Monomere in einpolymerisierter Form ein molares Einbauverhältnis von (A) : (B) : (C) : (D) von 1 : 0,5 bis 2,0 : 0,5 bis 2,0 : 0 bis 0,1 aufweisen.

Bevorzugt beträgt das molare Einbauverhältnis (A) : (B) : (C) : (D) von 1 : 0,6 bis 1,5 : 0,6 bis 1,5 : 0 bis 0,05.

Besonders bevorzugt beträgt das molare Einbauverhältnis (A) : (B) : (C) : (D) von 1 : 0,7 bis 1,0 : 0,7 bis 1,0 : 0.

Das erfindungsgemäße Copolymerisat ist in einem ersten Schritt durch Polymerisation einer Mischung der Monomere (A), (B), (C) sowie optional (D) erhältlich.

Die Copolymere sind durch die üblichen Copolymerisationsverfahren wie beispielsweise Lösungsmittelpolymerisation, Emulsionspolymerisation, Fällungspolymerisation oder Massenpolymerisation, bevorzugt Lösungsmittelpolymerisation oder Massenpolymerisation erhältlich, bevorzugt werden sie über die besagten Copolymerisationsverfahren erhalten.

Man kann die Monomerkomponenten in einer ersten Herstellungsstufe in Substanz, in Emulsion oder vorzugsweise in Lösung polymerisieren. Man kann hierbei für die Monomerkomponenten jeweils eine einzelne Monomerspezies oder Mischung aus mehreren solcher Monomerspezies einsetzen. Man führt die Polymerisationsreaktion in der Regel bei Normaldruck und unter einem Schutzgas, wie Stickstoff, durch, kann aber auch bei erhöhten Drücken bis zu 25 bar, beispielsweise in einem Autoklaven, arbeiten. Die Polymerisationstemperaturen liegen in der Regel bei 50 bis 250°C, insbesondere bei 90 bis 210°C, vor allem bei 120 bis 180°C, typischerweise bei 140 bis 160°C. Als Polymerisationsreaktor eignen sich im Prinzip alle üblichen kontinuierlich oder diskontinuierlich betriebenen Apparaturen wie beispielsweise Rührkessel, Rührkesselkaskade, Rohrreaktor oder Schlaufenreaktor.

Üblicherweise wird die Polymerisation durch radikalisch zerfallende Initiatoren gestartet, hierzu eignen sich Luft oder Sauerstoff oder organischen Peroxiden und/oder Hydroperoxiden sowie organische Azoverbindungen. Als organische Peroxide bzw. Hydroperoxide kommen beispielsweise Diisopropylbenzolhydroperoxid, Cumolhydroperoxid, Methylisobutylketonperoxid, Di-tert.-butylperoxid und Tert.-butylperisononat in Betracht. Als organische Azoverbindung ist beispielsweise Azobisisobutyronitril ("AIBN") geeignet. Weiterhin können geeignete Regler wie Thioalkohole, Aldehyde oder Ketone bei der Polymerisation mitverwendet werden.

Falls Lösungs- oder Emulsionsmittel bei der Polymerisation mitverwendet werden, kommen hierfür die üblichen hochsiedenden inerten Flüssigkeiten wie aliphatische Kohlenwasserstoffe, z.B. Heptan, Shellsol® D70, Weißöl, Lampenöl), aromatische Kohlenwasserstoffe, z. B. Ethylbenzol, Diethylbenzole, Toluol, Xylole oder entsprechende technische Kohlenwasserstoffgemische wie Shellsol®, Solvesso® oder Solvent Naphtha, in Betracht, ferner 1,2-Cyclohexandicarbonsäuredialkylester, bevorzugt 1,2-Cyclohexandicarbonsäurediisononylester.

In einer zweiten Reaktionsstufe wird das so erhältliche, bevorzugt das so erhaltene Copolymer mit dem Dialkylamin (E) umgesetzt. Für die Umsetzung ist in der Regel kein Katalysator erforderlich, sondern die Umsetzung kann bei Temperaturen von 50 bis 160 °C, bevorzugt 60 bis 140 und besonders bevorzugt 70 bis 120 °C erfolgen. Die Reaktion kann bevorzugt in einem inerten Lösungsmittel erfolgen, bevorzugt sind die oben für die Polymerisation aufgeführten Lösungsmittel.

Bei dem Dialkylamin (E) handelt es sich um mindestens ein, bevorzugt ein oder zwei und besonders bevorzugt genau ein Dialkylamin (E), bei dessen Alkylresten es sich unabhängig voneinander um mindestens 17 bis zu 30, bevorzugt 17 bis 26, besonders bevorzugt 17 bis 24 und ganz besonders bevorzugt 17 bis 22 Kohlenstoffatome aufweisende Alkylreste handelt.

Die beiden Alkylreste können gleich oder verschieden, bevorzugt gleich sein.

Die 17 bis zu 30 Kohlenstoffatome aufweisenden Alkylreste können linear oder verzweigt, bevorzugt linear sein, wobei es sich besonders bevorzugt um n-Heptadecyl, n-Octadecyl, n-Nonadecyl, n-Eicosyl, n-Heneicosyl, n-Docosyl, Lignoceryl, Ceryl und Myricyl, und besonders besonders bevorzugt um n-Octadecyl, n-Nonadecyl und n-Eicosyl handelt.

Bevorzugte Dialkylamine (E) sind Di-n-octadecylamin, Di-n-nonadecylamin und Di-n-eicosylamin.
Das molare Verhältnis von Dialkylamin (E) bezogen auf eingebaute Einheiten der Dicarbonsäure (A) im Copolymer beträgt bevorzugt mindestens 1,2 : 1, besonders bevorzugt 1,3 bis 2,0 : 1, ganz besonders bevorzugt 1,5 bis 2,0 : 1 und insbesondere 2,0 : 1.

In einer bevorzugten Ausführungsform wird das Dialkylamin so eingesetzt, daß idealisiert ein Äquivalent Dialkylamin (E) mit den eingebauten Einheiten der Dicarbonsäure (A) im Copolymer unter Bildung von Amidgruppen reagiert und ein weiteres Äquivalent Dialkylamin (E) die dabei gebildeten freien Carboxylgruppen neutralisiert.

In einer weiteren Ausführungsform kann auf die zweite Reaktionsstufe verzichtet werden, wenn das Monomer (A) bereits als Di- oder Monoamid, bevorzugt als Monoamid der ungesättigten Dicarbonsäure mit Dialkylaminen (E) eingesetzt wird.

In diesem Fall ist eine Amidierung des Copolymers aus (A), (B) und (C), sowie optional (D) nicht mehr erforderlich, da das Monomer (A) bereits als entsprechendes Amid in die Polymerisation eingesetzt wurde. In diesem Fall können die im so erhaltenen Copolymer enthaltenen freien Carboxylgruppen noch zu 20 bis 100 mol% mit dem Dialkylamin (E) neutralisiert werden.

Das erfindungsgemäße Copolymerisat nach Umsetzung mit der Komponente (E) weist vorzugsweise ein gewichtsmittleres Molekulargewicht (M_{w}) im Bereich von 2000 bis 20.000, besonders bevorzugt von 2200 bis 8000 und ganz besonders bevorzugt von 2500 bis 6000 g/mol auf (jeweils bestimmt durch Gelpermeationschromatographie). Die Polydispersität beträgt bevorzugt bis zu 3, besonders bevorzugt 2 bis 3.

Das erfindungsgemäße Copolymerisat kann bevorzugt in Kraftstoffen in der Funktion als Paraffindispergator ("WASA") verwendet werden. Das erfindungsgemäße Copolymerisat entfaltet seine Wirkung als Paraffindispergator oft besonders gut erst zusammen mit den üblichen Fließverbesserern.

Unter Fließverbesserern sollen im Rahmen der vorliegenden Erfindung alle Additive verstanden werden, die die Kälteeigenschaften von Mitteldestillat-Kraftstoffen verbessern. Neben den eigentlichen Kaltfließverbesserern ("MDFI") sind dies auch Nukleatoren (vgl. auch Ullmann's Encyclopedia of Industrial Chemistry, 5. Auflage, Band A16, S. 719 ff.).

Die erfindungsgemäßen Mitteldestillat-Kraftstoffe enthalten neben dem erfindungsgemäßen Copolymerisat beim Vorliegen von Kaltfließverbesserern diese in einer Menge von üblicherweise 1 bis 2000 Gew.-ppm, vorzugsweise von 5 bis 1000 Gew.-ppm, insbesondere von 10 bis 750 Gew.-ppm und vor allem von 50 bis 500 Gew.-ppm, z.B. von 150 bis 400 Gew.-ppm. Derartige Kaltfließverbesserer sind beispielsweise beschrieben in WO 2007/147753, dort besonders Seite 13, Zeile 1 bis Seite 16, Zeile 32.

Bevorzugte Fließverbesserer sind Ethylen-Vinylacetat-Copolymere, wie sie in der WO 99/29748 beschrieben sind, oder Kammpolymeren, wie sie in der WO 2004/035715 beschrieben sind, und bilden zusammen mit dem erfindungsgemäßen Copolymerisat in dessen Funktion als Paraffindispergator ein effizientes und vielseitig einsetzbares Kältestabiliserungssystem für Mitteldestillat-Kraftstoffe, insbesondere für solche mit einem Anteil an Biodiesel.

Besonders bevorzugt handelt es sich bei den Fließverbesserern um Copolymere von Ethylen mit wenigstens einem weiteren ethylenisch ungesättigten Monomer, vorzugsweise ausgewählt unter Alkenylcarbonsäureestern, (Meth)Acrylsäureestern, Maleinsäuredialkylestern, Fumarsäuredialkylestern und Olefinen.

Ganz besonders bevorzugt handelt es sich bei den Fließverbesserern um Ter- oder Quaterpolymere von Ethylen und mindestens einem Alkenylcarbonsäureester sowie mit wenigstens einem weiteren ethylenisch ungesättigten Monomer, vorzugsweise ausgewählt unter (Meth)Acrylsäureestern, Maleinsäuredialkylestern, Fumarsäuredialkylestern und Olefinen. Geeignete Olefine sind beispielsweise solche mit 3 bis 10 Kohlenstoffatomen sowie mit 1 bis 3, vorzugsweise mit 1 oder 2, insbesondere mit einer Kohlenstoff-Kohlenstoff-Doppelbindung. Im zuletzt genannten Fall kann die Kohlenstoff-Kohlenstoff-Doppelbindung sowohl terminal (α-Olefine) als auch intern angeordnet sein kann. Bevorzugt sind jedoch α-Olefine, besonders bevorzugt α-Olefine mit 3 bis 6 Kohlenstoffatomen, beispielsweise Propen, 1-Buten, 1-Penten und 1-Hexen.

Geeignete (Meth)Acrylsäureester sind beispielsweise Ester der (Meth)Acrylsäure mit C₁- bis C₁₀-Alkanolen, insbesondere mit Methanol, Ethanol, Propanol, Isopropanol, n-Butanol, sec.-Butanol, Isobutanol, tert.-Butanol, Pentanol, Hexanol, Heptanol, Octanol, 2-Ethylhexanol, Nonanol und Decanol.

Geeignete Alkenylcarbonsäureester sind beispielsweise die Vinyl- und Propenylester von Carbonsäuren mit 2 bis 20 Kohlenstoffatomen, deren Kohlenwasserstoffrest linear oder verzweigt sein kann. Bevorzugt sind hierunter die Vinylester. Unter den Carbonsäuren mit verzweigtem Kohlenwasserstoffrest sind solche bevorzugt, deren Verzweigung sich in der α-Position zur Carboxylgruppe befindet, wobei das α-Kohlenstoffatom besonders bevorzugt tertiär ist, d. h. die Carbonsäure eine sogenannte Neocarbonsäure ist. Vorzugsweise ist der Kohlenwasserstoffrest der Carbonsäure jedoch linear.

Beispiele für geeignete Alkenylcarbonsäureester sind Vinylacetat, Vinylpropionat, Vinylbutyrat, Vinyl-2-ethylhexanoat, Neopentansäurevinylester, Hexansäurevinylester, Neononansäurevinylester, Neodecansäurevinylester und die entsprechenden Propenylester, wobei die Vinylester bevorzugt sind. Ein besonders bevorzugter Alkenylcarbonsäureester ist Vinylacetat; typische hieraus resultierende Copolymere sind Ethylen-Vinylacetat-Copolymere ("EVA"), welche in großem Umfang in Dieselkraftstoffen eingesetzt werden.
Besonders bevorzugt ist das ethylenisch ungesättigte Monomer ausgewählt unter Alkenylcarbonsäureestern.

Beispiele für Maleinsäuredialkylester und Fumarsäuredialkylester sind die Methyl-, Ethyl-, n-Propyl-, iso-Propyl-, n-Butyl-, sek-Butyl-, iso-Butyl-, n-Pentyl-, n-Hexyl-, 2-Ethylhexyl- und 2-Propylheptylester der Maleinsäure bzw. Fumarsäure, wobei es sich um gemischte oder bevorzugt um gleiche Ester handelt, d.h. bei Alkylreste sind gleich.

Geeignet sind auch Copolymere, die zwei oder mehrere voneinander verschiedene Alkenylcarbonsäureester einpolymerisiert enthalten, wobei diese sich in der Alkenylfunktion und/oder in der Carbonsäuregruppe unterscheiden. Ebenfalls geeignet sind Copolymere, die neben dem/den Alkenylcarbonsäureester(n) wenigstens ein Olefin und/oder wenigstens ein (Meth)Acrylsäureester einpolymerisiert enthalten.

Das ethylenisch ungesättigte Monomer ist im Copolymer in einer Menge von vorzugsweise 1 bis 50 Mol.-%, insbesondere von 10 bis 50 Mol.-% und vor allem von 5 bis 20 Mol.-%, bezogen auf das Gesamtcopolymer, einpolymerisiert.

Die Copolymere weisen vorzugsweise ein zahlenmittleres Molekulargewicht Mₙ von 1000 bis 20.000, besonders bevorzugt von 1000 bis 10.000 und insbesondere von 1000 bis 6000 auf.

Ebenso können durch die Verwendung der erfindungsgemäßen Copolymerisate eine Reihe weitere Kraftstoffeigenschaften verbessert werden. Exemplarisch sollen hier nur die zusätzliche Wirkung als Cloud Point Depressant (CPD) oder als Booster zusammen mit einem Fließverbesserer zur weiteren Verbesserung des CFPP genannt werden.

Die erfindungsgemäßen Copolymerisate können sowohl Mitteldestillat-Kraftstoffen, die vollständig fossilen Ursprungs sind, also aus Erdöl gewonnen wurden, als auch Kraftstoffen, die neben dem auf Erdöl basierenden Anteil einen Anteil an Biodiesel enthalten, zur Verbesserung deren Eigenschaften zugesetzt werden. In beiden Fällen wird eine deutliche Verbesserung des Kaltfließverhaltens des Mitteldestillat-Kraftstoffes, d.h. eine Absenkung der CP-Werte und/oder CFPP-Werte, unabhängig von der Herkunft oder der Zusammensetzung des Kraftstoffes beobachtet. Die ausgeschiedenen Paraffinkristalle werden wirksam in der Schwebe gehalten, so dass es nicht zu Verstopfungen von Filtern und Leitungen durch sedimentiertes Paraffin kommt. Die erfindungsgemäßen Copolymerisate weisen eine gute Breitenwirkung auf und bewirkt so, dass die ausgeschiedenen Paraffinkristalle in den unterschiedlichsten Mitteldestillat-Kraftstoffen sehr gut dispergiert werden.

Gegenstand der vorliegenden Erfindung sind auch Kraftstoffe, insbesondere solche mit einem Biodiesel-Anteil, die die erfindungsgemäßen Copolymerisate enthalten.

In der Regel enthalten die Kraftstoffe oder Kraftstoffadditiv-Konzentrate noch als weitere Zusätze in hierfür üblichen Mengen Fließverbesserer (wie oben beschrieben), weitere Paraffindispergatoren, Leitfähigkeitsverbesserer, Korrosionsschutzadditive, Lubricity-Additive, Antioxidantien, Metall-Deaktivatoren, Antischaummittel, Demulgatoren, Detergentien, Cetanzahl-Verbesserer, Lösungs- oder Verdünnungsmittel, Farbstoffe oder Duftstoffe oder Gemische davon. Die vorstehend genannten weiteren Zusätze sind dem Fachmann geläufig und brauchen deshalb hier nicht weiter erläutert zu werden.

Unter Brennstoffölen sollen im Rahmen der vorliegenden Erfindung Mitteldestillat-Kraftstoffe aus fossilem, pflanzlichem oder tierischem Ursprung, Biobrennstofföle ("Biodiesel") und Mischungen aus solchen Mitteldestillat-Kraftstoffen und Biobrennstoffölen verstanden werden.

Mit Mitteldestillat-Kraftstoffen (nachfolgend auch kurz "Mitteldestillate" genannt) werden insbesondere Kraft- und Brennstoffe bezeichnet, die durch Destillation von Rohöl als erstem Verfahrensschritt gewonnen werden und im Bereich von 120 bis 450°C sieden. Solche Mitteldestillat-Kraftstoffe werden insbesondere als Dieselkraftstoff, Heizöl oder Kerosin verwendet, wobei Dieselkraftstoff und Heizöl besonders bevorzugt sind. Vorzugsweise werden schwefelarme Mitteldestillate verwendet, d.h. solche, die weniger als 350 ppm Schwefel, insbesondere weniger als 200 ppm Schwefel, vor allem weniger als 50 ppm Schwefel enthalten. In speziellen Fällen enthalten sie weniger als 10 ppm Schwefel, diese Mitteldestillate werden auch als "schwefelfrei" bezeichnet. Es handelt sich dabei im allgemeinen um Rohöldestillate, die einer hydrierenden Raffination unterworfen wurden, und daher nur geringe Anteile an polyaromatischen und polaren Verbindungen enthalten. Vorzugsweise handelt es sich um solche Mitteldestillate, die 90%-Destillationspunkte unter 370°C, insbesondere unter 360°C und in Spezialfällen unter 330°C aufweisen.

Schwefelarme und schwefelfreie Mitteldestillate können auch aus schwereren Erdölfraktionen gewonnen werden, die nicht mehr unter Atmosphärendruck destilliert werden können. Als typische Konversionsverfahren zur Herstellung von Mitteldestillaten aus schweren Erdölfraktionen seien genannt: Hydrocracken, thermisches Cracken, katalytisches Cracken, Cokerprozesse und/oder Visbreaking. Je nach Verfahrensdurchführung fallen diese Mitteldestillate schwefelarm oder schwefelfrei an oder werden einer hydrierenden Raffination unterworfen.

Vorzugsweise haben die Mitteldestillate Aromatengehalte von unter 28 Gew.-%, insbesondere unter 20 Gew.-%. Der Gehalt an Normalparaffinen beträgt zwischen 5% und 50 Gew.-%, vorzugsweise liegt er zwischen 10 und 35 Gew.%.

Im Sinne der vorliegenden Erfindung sollen hier unter Mitteldestillat-Kraftstoffen auch solche Kraft- oder Brennstoffe verstanden werden, welche sich entweder indirekt von fossilen Quellen wie Erdöl oder Erdgas ableiten lassen oder aber aus Biomasse über Vergasung und anschließende Hydrierung hergestellt werden. Ein typisches Beispiel für einen sich indirekt von fossilen Quellen ableitenden Mitteldestillat-Kraftstoff ist der mittels Fischer-Tropsch-Synthese erzeugte GTL("gas-to-liquid")-Dieselkraftstoff. Aus Biomasse wird beispielweise über den BTL("biomassto-liquid")-Prozess ein Mitteldestillat hergestellt, das entweder allein oder in Mischung mit anderen Mitteldestillaten als Kraft- oder Brennstoff verwendet werden kann. Zu den Mitteldestillaten gehören auch Kohlenwasserstoffe, die durch Hydrierung von Fetten und Fettölen gewonnen werden. Sie enthalten überwiegend n-Paraffine.

Die Qualitäten der Heizöle und Dieselkraftstoffe sind beispielsweise in DIN 51603 und EN 590 näher festgelegt (vgl. auch Ullmann's Encyclopedia of Industrial Chemistry, 5. Auflage, Band A12, S. 617 ff.).

Das erfindungsgemäße Copolymerisat kann neben seiner Verwendung in den genannten Mitteldestillat-Kraftstoffen aus fossilem, pflanzlichem oder tierischem Ursprung, die im wesentlichen Kohlenwasserstoffmischungen darstellen, auch in Biobrennstoffölen und in Mischungen aus den genannten Mitteldestillaten mit Biobrennstoffölen zur Verbesserung des Kaltfließverhaltens eingesetzt werden. Derartige Mischungen sind handelsüblich und enthalten meist die Biobrennstofföle in untergeordneten Mengen, typischerweise in Mengen von 1 bis 30 Gew.-% insbesondere von 3 bis 10 Gew.-%, bezogen auf die Gesamtmenge aus Mitteldestillat fossilen, pflanzlichem oder tierischen Ursprungs und Biobrennstofföl.

Biobrennstofföle basieren in der Regel auf Fettsäureestern, vorzugsweise im wesentlichen auf Alkylester von Fettsäuren, die sich von pflanzlichen und/oder tierischen Ölen und/oder Fetten ableiten. Unter Alkylestern werden bevorzugt Niedrigalkylester, insbesondere C₁- bis C₄-Alkylester, verstanden, die durch Umesterung der in pflanzlichen und/oder tierischen Ölen und/oder Fetten vorkommenden Glyceride, insbesondere Triglyceride, mittels Niedrigalkoholen, beispielsweise Ethanol oder vor allem Methanol ("FAME"), erhältlich sind. Typische Niedrigalkylester auf Basis von pflanzlichen und/oder tierischen Ölen und/oder Fetten, die als Biobrennstofföl oder Komponenten hierfür Verwendung finden, sind beispielsweise HVO (hydrogenated vegetable oil), Sonnenblumenmethylester, Palmölmethylester ("PME"), Sojaölmethylester ("SME") und insbesondere Rapsölmethylester ("RME").

Das erfindungsgemäße Copolymerisat bewirkt eine Verminderung der Kristallisation von Paraffinkristallen in Kraftstoffen, insbesondere solchen, die Biobrennstofföle enthalten.

Die übrigen vorstehend genannten weiteren Zusätze sind im übrigen dem Fachmann geläufig und brauchen deshalb hier nicht weiter erläutert zu werden.

Die nachfolgenden Beispiele sollen die vorliegende Erfindung erläutern, ohne sie zu beschränken.

### Beispiele

Herstellungsbeispiele 1 bis 16:

### Schritt 1:

In einem 2 Liter Pilot Rührwerk wurden die in Tabelle A angegebene Menge Solvesso® 150 und Olefin vorgelegt. Die Vorlage wurde mit N₂ begast und auf 150°C aufgeheizt. Nach Erreichen der Temperatur wurden gleichzeitig die in Tabelle A angegebene Menge Maleinsäureanhydrid (MSA) geschmolzen bei 80°C durch einen beheizbaren Zulauf innerhalb von 3 Stunden in die Reaktionsmischung kontinuierlich hinzugefügt.
Parallel dazu wurde innerhalb von 3 Stunden die in Tabelle A angegebene Menge tert. Butylperoxid als Initiator der Reaktion hinzudosiert, sowie in einem separaten Zulauf die in Tabelle A angegebene Menge des entsprechenden Acrylats. Die Reaktionsmischung ließ man nach dem Zulaufsende von Maleinsäureanhydrid und Initiator eine Stunde bei 150°C weiter rühren.

### Schritt 2:

Der Reaktionsmischung aus Schritt 1 wurde die in Tabelle A angegebene Menge Amin 1 hinzugefügt. Die Mischung wurde über 4 Stunden bei 160°C gerührt. Anschließend wurde erneut die in Tabelle A angegebene Menge Amin 2 auf einmal hinzugefügt und für zusätzliche 15 Minuten gerührt. Anschließend wurde die Reaktion abgekühlt und beendet. Falls erforderlich wurde das Copolymer anschließend in Solvesso® 150 auf einen Gehalt von 50% verdünnt.

Gewichtsmittleres Molekulargewicht (Mw) und Polydispersität (PD) der erhaltenen Copolymere wurden via GPC bestimmt und in Tabelle B angegeben.

### Anwendungstechnische Beispiele

In die anwendungstechnischen Beispiele wurden Dieselkraftstoffe (DK) mit den in Tabelle C angegebenen Herkunftsangaben und Kennzahlen eingesetzt.

### Wirkung als Paraffindispergatoren (WASA)

In den nachfolgenden Beispielen (Tabellen 1-4) wurden die oben hergestellten Copolymere in Gegenwart üblicher Fließverbesser (MDFI) auf ihre Wirkung als Paraffindispergatoren (WASA) untersucht.

Von den additivierten Kraftstoffproben wurden der Cloud Point (CP) nach ISO 3015 und der CFPP nach EN 116 bestimmt. Danach wurden die additivierten Kraftstoffproben in 500 ml-Glaszylindern zur Bestimmung des Delta CP-Werts in einem Kältebad auf -16°C abgekühlt und 16 Stunden bei dieser Temperatur gelagert. Von der bei -16°C abgetrennten 20 Vol.-%-Bodenphase wurde von jeder Probe wiederum der CP nach ISO 3015 ermittelt. Je geringer die Abweichung des CP der 20 Vol.-%-Bodenphase vom ursprünglichen CP (Delta CP) der jeweiligen Kraftstoffprobe, desto besser sind die Paraffine dispergiert.

Je geringer Delta CP und je tiefer der CFPP, desto besser ist das Kaltfließverhalten eines Dieselkraftstoffs

Durch die erfindungsgemäßen Copolymere wird das Kaltfließverhalten hinsichtlich Delta CP oder CFPP oder beider Parameter verbessert.

Die Durchführung des Kurzsediment-Testes erfolgte analog der Aral-Methode QSAA FKL 027 mit folgender Modifikation:
Dieselkraftstoffe 1-4: Abkühlen auf -16°C und 16 Std. bei dieser Temperatur halten WASA-Formulierungen enthalten 36 Gew.% des jeweiligen Copolymers

Bei den eingesetzten MDFI handelt es sich um kommerziell erhältliche Fließverbesserer-Formulierungen:
MDFI 1 ist eine Mischung aus einem Ethylen/Vinylacetat-Copolymer, einem Ethylen/Vinylacetat/Propylheptylacrylat-Terpolymer und einem Polyacrylat in Solvent Naphtha
MDFI 2 ist ein Ethylen/Vinylacetat-Copolymer in Solvent Naphtha
MDFI 3 ist ein Ethylen/Vinylacetat/Propylheptylacrylat-Terpolymer in Solvent Naphtha
MDFI 4 ist ein Ethylen/Vinylacetat/Ethylhexylacrylat-Terpolymer in Solvent Naphtha Wirkung als Cloud Point Depressants (CPD)

In Tabelle 5 wurde das erfindungsgemäße Copolymer aus Beispiel 1 in verschiedenen Dieselkraftstoffen auf seine Wirkung als Cloud Point Depressant (CPD) getestet.

Je größer die Absenkung des CP gegenüber dem unadditivierten Kraftstoff, desto besser ist die Wirkung als Cloud Point Depressant.

Durch die erfindungsgemäßen Copolymere wird der CP signifikant abgesenkt.

CPD-Formulierung enthält 36 Gew% des Copolymers aus Beispiel 1 in Solvent Naphtha.

### Wirkung als CFPP-Verbesserer (Booster)

In Tabelle 6 wurde das erfindungsgemäße Copolymer aus Beispiel 1 als Co-additiv (Booster) zur weiteren CFPP-Verbesserung in Gegenwart eines üblichen MDFI getestet.

Durch die erfindungsgemäßen Copolymere kann das CFPP-Ziel bei geringerer Gesamtdosierung erreicht werden oder es wird bei gleicher Gesamtdosierung ein tieferer CFPP erreicht

Das Co-additiv enthält 36 Gew.% des Copolymers 1 in Solvent Naphtha .

**Tabelle A**

| Beispiel | **Solvesso 150 (g)** | **Olefin** | **(g)** | **MSA (g)** | **Acrylat** | **(g)** | **Tert.butyl peroxid (g)** | **Amin 1** | **(g)** | **Amin 2** | **(g)** |
|---|---|---|---|---|---|---|---|---|---|---|---|
| | | | | | | | | | | | |
| 1 | 363 | Dodecen | 175 | 102 | Laurylacrylat | 265 | 2,83 | Distearylamin | 541 | Distearylamin | 541 |
| 2 | 268,05 | Dodecen | 129 | 75 | Laurylacrylat | 195 | 2,09 | Distearylamin | 398 | Distearylamin | 398 |
| 3 | 203,4 | Decen | 87 | 70 | Laurylacrylat | 181 | 1,83 | Distearylamin | 371 | Distearylamin | 371 |
| 4 | 168,16 | Octen | 72 | 74 | Laurylacrylat | 192 | 1,83 | Distearylamin | 392 | Distearylamin | 392 |
| 5 | 104,7 | Dodecen | 116 | 68 | Heptadecylacrylat | 215,4 | 2,09 | Distearylamin | 360 | Distearylamin | 360 |
| 6 | 117,27 | Dodecen | 129 | 75 | Tridecylacrylat A | 195 | 2,09 | Distearylamin | 398 | Distearylamin | 398 |
| 7 | 117,27 | Dodecen | 129 | 75 | Tridecylacrylat N | 195 | 2,09 | Distearylamin | 398 | Distearylamin | 398 |
| 8 | 166,09 | Dodecen | 180 | 106 | Nonylacrylat | 213 | 2,61 | Distearylamin | 562 | Distearylamin | 562 |
| 9 | 198,27 | Dodecen | 213 | 124 | n-Butylacrylat | 162,5 | 2,61 | Distearylamin | 657 | Distearylamin | 657 |
| 10 | 315 | Dodecen | 153 | 87 | Ethylhexylacrylat | 163,7 | 2,09 | Distearylamin | 461 | Distearylamin | 461 |
| | | | | | | | | | | | |
| 11 (Vgl) | 363 | Dodecen | 175 | 102 | Laurylacrylat | 265 | 2,83 | Distearylamin | 540 | Didodecylamin | 368 |
| 12 (Vgl) | 150 | - | - | 139 | Laurylacrylat | 361 | 2,61 | Distearylamin | 737 | Distearylamin | 737 |
| 13 (Vgl) | 495,8 | Dodecen | 600 | 175 | - | - | 4,85 | Distearylamin | 928 | Distearylamin | 928 |
| 14 (Vgl) | 313 | C20-24 | 268 | 102 | - | - | 4,2 | Distearylamin | 541 | Distearylamin | 541 |
| 15 (Vgl) | 96,8 | Dodecen | 108,7 | 63,43 | Behenylacrylat | 227,9 | 2,09 | Distearylamin | 336 | Distearylamin | 336 |
| 16 (Vgl) | 363 | Dodecen | 175 | 102 | Laurylacrylat | 265 | 2,83 | Didodecylamin | 368 | Distearylamin | 540 |

**Tabelle B**

| **Beispiel** | **Molekular gewicht (Mw)** | **PD** |
|---|---|---|
| | | |
| 1 | 4250 | 2 |
| 2 | 3750 | 2 |
| 3 | 3310 | 2 |
| 4 | 5150 | 2,2 |
| 5 | 5200 | 2,1 |
| 6 | 5670 | 2,1 |
| 7 | 4520 | 2,2 |
| 8 | 5390 | 2 |
| 9 | 5060 | 2,1 |
| 10 | 2860 | 2 |
| | | |
| 11 (Vgl) | 4250 | 2 |
| 12 (Vgl) | 4450 | 2,1 |
| 13 (Vgl) | 4000 | 2 |
| 14 (Vgl) | 4200 | 2,1 |
| 15 (Vgl) | 7510 | 2,5 |
| 16 (Vgl) | 4250 | 2 |

**Tabelle C**

| | DK 1 | DK 2 | DK 3 | DK 4 | DK 7 | DK 8 | DK 9 | DK 10 | DK 11 |
|---|---|---|---|---|---|---|---|---|---|
| Herkunft | Zentraleuropa | Zentraleuropa | Osteuropa | Zentraleuropa | Südeuropa | Zentraleuropa | Zentraleuropa | USA | Osteuropa |
| Cloud Point CP [°C] | -5,6 | -7,1 | -8,3 | -4,8 | -5,3 | -6,1 | -4,9 | -15,5 | -7,8 |
| CFPP [°C] | -5 | -8 | -8 | -5 | -13 | -8 | -6 | -18 | -9 |
| Dichte @15°C [kg/m3] | 842,6 | 839,2 | 827,9 | 845,1 | 841,3 | 839,7 | 834,1 | 831,4 | 830 |
| 90 Vol% - 20 Vol% [°C] | 118 | n.b. | 115 | 113 | 127 | 124 | 114 | 116 | 113 |
| IBP [°C] | 168 | n.b. | 179 | 172 | 171 | 171 | 164 | 167 | 167 |
| FBP [°C] | 359 | n.b. | 359 | 360 | 363 | 356 | 359 | 363 | 355 |
| n-Paraffine [%] | 18,2 | 19,1 | 21,9 | 17,1 | 15,2 | 19,3 | 17,2 | 15,6 | 16,9 |

**Tabelle 1**

| DK 1; CFPP: -5°C; CP: -5,6°C | | | | | |
|---|---|---|---|---|---|
| **MDFI** | **Dosierung [ppm]** | **WASA mit Copolymer aus Beispiel** | **Dosierung [ppm]** | **CFPP [°C]** | **Delta CP [K]** |
| | | | | | |
| MDFI 1 | 150 | 1 | 150 | -29 | 2,4 |
| MDFI 1 | 150 | 4 | 150 | -30 | 3,2 |
| MDFI 1 | 150 | 5 | 150 | -27 | 1,7 |
| MDFI 1 | 150 | 6 | 150 | -28 | 2,7 |
| MDFI 1 | 150 | 7 | 150 | -27 | 2,8 |
| MDFI 1 | 150 | 9 | 150 | -28 | 2,8 |
| MDFI 1 | 150 | 11 (Vgl) | 150 | -25 | 5,5 |
| MDFI 1 | 150 | 12 (Vgl) | 150 | -16 | 3,2 |
| MDFI 1 | 150 | 14 (Vgl) | 150 | geliert | n.a. |
| MDFI 1 | 150 | 15 (Vgl) | 150 | -9 | 6,1 |
| MDFI 1 | 150 | 16 (Vgl) | 150 | -19 | 4,1 |

**Tabelle 2**

| DK 2; CFPP: -8°C; CP: -7,1°C | | | | | |
|---|---|---|---|---|---|
| **MDFI** | **Dosierung [ppm]** | **WASA mit Copolymer aus Beispiel** | **Dosierung [ppm]** | **CFPP [°C]** | **Delta CP [K]** |
| | | | | | |
| MDFI 2 | 150 | 1 | 150 | -29 | 1,3 |
| MDFI 2 | 150 | 2 | 150 | -27 | 0,9 |
| MDFI 2 | 150 | 3 | 150 | -27 | 1,4 |
| MDFI 2 | 150 | 6 | 150 | -29 | 1,5 |
| MDFI 2 | 150 | 8 | 150 | -27 | 1,4 |
| MDFI 2 | 150 | 10 | 150 | -27 | 1,4 |
| MDFI 2 | 150 | 12 (Vgl) | 150 | -27 | 2,4 |
| MDFI 2 | 150 | 15 (Vgl) | 150 | -10 | 5,1 |

**Tabelle 3**

| DK 3; CFPP: -8°C; CP: -8,3°C | | | | | |
|---|---|---|---|---|---|
| **MDFI** | **Dosierung [ppm]** | **WASA mit Copolymer aus Beispiel** | **Dosierung [ppm]** | **CFPP [°C]** | **Delta CP [K]** |
| | | | | | |
| MDFI 3 | 300 | 1 | 200 | -28 | 1,9 |
| MDFI 3 | 300 | 3 | 200 | -28 | 1,1 |
| MDFI 3 | 300 | 7 | 200 | -29 | 2 |
| MDFI 3 | 300 | 11 (Vgl) | 200 | -27 | 9 |
| MDFI 3 | 300 | 13 (Vgl) | 200 | -24 | 4,1 |
| MDFI 3 | 300 | 15 (Vgl) | 200 | -20 | 6,3 |
| MDFI 3 | 300 | 16 (Vgl) | 200 | -20 | 2 |

**Tabelle 4**

| DK 4; CFPP: -5°C; CP: -4,8°C | | | | | |
|---|---|---|---|---|---|
| **MDFI** | **Dosierung [ppm]** | **WASA mit Copolymer aus Beispiel** | **Dosierung [ppm]** | **CFPP [°C]** | **Delta CP [K]** |
| | | | | | |
| MDFI 1 | 150 | 1 | 150 | -29 | 3,3 |
| MDFI 1 | 150 | 7 | 150 | -26 | 3,4 |
| MDFI 1 | 150 | 9 | 150 | -26 | 3,1 |
| MDFI 1 | 150 | 15 (Vgl) | 150 | -7 | 6,4 |

**Tabelle 5**

| CPD-Formulierung | Dosierung [ppm] | CP [°C] | CP [°C | CP [°C] | CP [°C] | CP [°C] |
|---|---|---|---|---|---|---|
| | | DK 7 | DK 8 | DK 9 | DK 10 | DK 11 |
| - | - | -5,3 | -6,1 | -4,4 | -15,5 | -7,8 |
| Copolymer aus Bsp. 1 | 100 | -6,2 | - | -5,8 | -17,2 | -9,1 |
| Copolymer aus Bsp. 1 | 300 | -7,1 | -8,5 | -6,7 | -17,9 | -10 |
| Copolymer aus Bsp. 1 | 500 | -7,7 | -9 | -7,1 | -18,3 | -10,6 |

**Tabelle 6**

| DK 11; CFPP: -9°C; CP: -7,8°C | | | | |
|---|---|---|---|---|
| **MDFI** | **Dosierung [ppm]** | **Copolymer aus Beispiel** | **Dosierung [ppm]** | **CFPP [°C]** |
| - | - | - | - | -9 |
| MDFI 4 | 100 | - | - | -13 |
| MDFI 4 | 200 | - | - | -20 |
| MDFI 4 | 300 | - | - | -23 |
| MDFI 4 | 150 | 1 | 50 | -23 |
| MDFI 4 | 225 | 1 | 75 | -28 |

## Patentansprüche

1. Copolymerisat erhältlich durch Copolymerisation von
(A) mindestens einer ungesättigten Dicarbonsäure oder deren Derivate,
(B) mindestens einem α-Olefin mit von mindestens 6 bis zu einschließlich 20 Kohlenstoffatomen,
(C) mindestens eines C₃- bis C₂₀-Alkylesters der Acrylsäure oder Methacrylsäure oder einer Mischung solcher Alkylester und
(D) optional eines oder mehrerer weiterer copolymerisierbarer Monomere, die verschieden von den Monomeren (A), (B) und (C) sind,
gefolgt von der Umsetzung mit mindestens einem Dialkylamin (E), wobei es sich bei den beiden Alkylresten des mindestens einen Dialkylamins (E) unabhängig voneinander um mindestens 17 bis zu 30 Kohlenstoffatome aufweisende Alkylreste handelt.

2. Copolymerisat gemäß Anspruch 1, **dadurch gekennzeichnet, daß** Monomer (A) ausgewählt ist aus der Gruppe bestehend aus Maleinsäure, Fumarsäure, 2-Methylmaleinsäure, 2,3-Dimethylmaleinsäure, 2-Methylfumarsäure, 2,3-Dimethylfumarsäure, Methylenmalonsäure und Tetrahydrophthalsäure und deren Derivaten.

3. Copolymerisat gemäß Anspruch 1 oder 2, **dadurch gekennzeichnet, daß** Monomer (B) ausgewählt ist aus der Gruppe bestehend aus 1-Hexen, 1-Hepten, 1-Octen, 1-Nonen, 1-Decen, 1-Undecen, 1-Dodecen, 1-Tridecen, 1-Tetradecen, 1-Pentadecen, 1-Hexadecen, 1-Heptadecen, 1- Octadecen, 1-Nonadecen und 1-Eicosen

4. Copolymerisat gemäß einem der vorstehenden Ansprüche, **dadurch gekennzeichnet, daß** Monomer (C) ausgewählt ist aus der Gruppe bestehend aus Estern der Acryl- und Methacrylsäure mit n-Propanol, iso-Propanol, n-Butanol, sec.-Butanol, Isobutanol, tert.-Butanol, n-Pentanol, tert.-Pentanol, n-Hexanol, n-Heptanol, n-Octanol, 2-Ethylhexanol, n-Nonanol, Isononanol, n-Decanol, 2-Propylheptanol, n-Undecanol, iso-Undecanol, n-Dodecanol, n-Tridecanol, Isotridecanol, 3,3,5,5,7-Pentamethyloctanol, n-Tetradecanol, n-Pentadecanol, n-Hexadecanol, n-Heptadecanol, iso-Heptadecanol, 3,3,5,5,7,7,9-Heptamethyldecanol, n-Octadecanol und n-Eicosanol.

5. Copolymerisat gemäß einem der vorstehenden Ansprüche, **dadurch gekennzeichnet, daß** das optional Monomer (D) ausgewählt ist aus der Gruppe bestehend aus cycloaliphatischen (Meth)acrylaten (D1), (Meth)acrylaten von Polyalkylenglykolmonoalkylethern (D2), Vinylalkanoaten (D3), Allylverbindungen (D4), Vinylethern (D5), N-Vinyllactamen (D6), N-Vinylimidazolen (D7), ethylenisch ungesättigten Aromaten (D8), Schwefeldioxid (D9) und ethylenisch ungesättigten Nitrilen (D10).

6. Copolymerisat gemäß einem der vorstehenden Ansprüche, **dadurch gekennzeichnet, daß** die Monomere in einpolymerisierter Form ein molares Einbauverhältnis von (A) : (B) : (C) : (D) von 1 : 0,5 bis 2,0 : 0,5 bis 2,0 : 0 bis 0,1 aufweisen.

7. Copolymerisat gemäß einem der vorstehenden Ansprüche, **dadurch gekennzeichnet, daß** es sich bei dem Dialkylamin (E) um Di-n-octadecylamin, Di-n-nonadecylamin oder Di-n-eicosylamin handelt.

8. Copolymerisat gemäß einem der vorstehenden Ansprüche, **dadurch gekennzeichnet, daß** das molare Verhältnis von Dialkylamin (E) bezogen auf eingebaute Einheiten der Dicarbonsäure (A) im Copolymer mindestens 1,2 : 1 und bis zu 2,0 : 1 beträgt.

9. Copolymerisat gemäß einem der vorstehenden Ansprüche mit einem gewichtsmittleren Molekulargewicht (M_{w}) von 2000 bis 20.000 (bestimmt durch Gelpermeationschromatographie).

10. Verfahren zur Herstellung von Copolymerisaten gemäß einem der vorstehenden Ansprüche durch Lösungsmittelpolymerisation, Emulsionspolymerisation, Fällungspolymerisation oder Massenpolymerisation bei Polymerisationstemperaturen von 50 bis 250° C in kontinuierlich oder diskontinuierlich betriebenen Apparaturen, gefolgt von der Umsetzung mit mindestens einem Dialkylamin (E), wobei es sich bei den beiden Alkylresten des mindestens einen Dialkylamins (E) unabhängig voneinander um mindestens 17 bis zu 30 Kohlenstoffatome aufweisende Alkylreste handelt.

11. Verwendung des Copolymerisates gemäß einem der Ansprüche 1 bis 9 zur Verminderung der Kristallisation von Paraffinkristallen in Kraftstoffen.

12. Verwendung des Copolymerisates gemäß einem der Ansprüche 1 bis 9 zur Verbesserung der Kaltfließeigenschaften von Brennstoffölen und zur Verbesserung der Filtrierbarkeit von Kaltfließverbesserer-Additiven enthaltenden Brennstoffölen.

13. Brennstofföl, enthaltend 10 bis 5000 Gew.-ppm mindestens eines Copolymerisats gemäß einem der Ansprüche 1 bis 9 und zusätzlich optional weitere Additive ausgewählt aus der Gruppe bestehend aus Kaltfließverbesserern, Paraffindispergatoren, Leitfähigkeitsverbesserern, Korrosionsschutzadditiven, Lubricity-Additiven, Antioxidantien, Metall-Deaktivatoren, Antischaummitteln, Demulgatoren, Detergentien, Cetanzahl-Verbesserern, Lösungs- oder Verdünnungsmitteln, Farbstoffen und Duftstoffen.

## Claims

1. A copolymer obtainable by copolymerization of
(A) at least one unsaturated dicarboxylic acid or derivatives thereof,
(B) at least one α-olefin having from at least 6 up to and including 20 carbon atoms,
(C) at least one C₃- to C₂₀-alkyl ester of acrylic acid or methacrylic acid or a mixture of such alkyl esters and
(D) optionally one or more further copolymerizable monomers other than monomers (A), (B) and (C),
followed by the reaction with at least one dialkylamine (E), where the two alkyl radicals in the at least one dialkylamine (E) are independently alkyl radicals having at least 17 up to 30 carbon atoms.

2. The copolymer according to claim 1, wherein monomer (A) is selected from the group consisting of maleic acid, fumaric acid, 2-methylmaleic acid, 2,3-dimethylmaleic acid, 2-methylfumaric acid, 2,3-dimethylfumaric acid, methylenemalonic acid and tetrahydrophthalic acid and derivatives thereof.

3. The copolymer according to claim 1 or 2, wherein monomer (B) is selected from the group consisting of 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene and 1-eicosene.

4. The copolymer according to any of the preceding claims, wherein monomer (C) is selected from the group consisting of esters of acrylic acid and methacrylic acid with n-propanol, isopropanol, n-butanol, sec-butanol, isobutanol, tert-butanol, n-pentanol, tert-pentanol, n-hexanol, n-heptanol, n-octanol, 2-ethylhexanol, n-nonanol, isononanol, n-decanol, 2-propylheptanol, n-undecanol, iso-undecanol, n-dodecanol, n-tridecanol, isotridecanol, 3,3,5,5,7-pentamethyloctanol, n-tetradecanol, n-pentadecanol, n-hexadecanol, n-heptadecanol, iso-heptadecanol, 3,3,5,5,7,7,9-heptamethyldecanol, n-octadecanol and n-eicosanol.

5. The copolymer according to any of the preceding claims, wherein the optional monomer (D) is selected from the group consisting of cycloaliphatic (meth)acrylates (D1), (meth)acrylates of polyalkylene glycol monoalkyl ethers (D2), vinyl alkanoates (D3), allyl compounds (D4), vinyl ethers (D5), N-vinyllactams (D6), N-vinylimidazoles (D7), ethylenically unsaturated aromatics (D8), sulfur dioxide (D9) and ethylenically unsaturated nitriles (D10).

6. The copolymer according to any of the preceding claims, wherein the monomers in copolymerized form have a molar incorporation ratio of (A):(B):(C):(D) of 1:0.5 to 2.0:0.5 to 2.0:0 to 0.1.

7. The copolymer according to any of the preceding claims, wherein the dialkylamine (E) is di-n-octadecylamine, di-n-nonadecylamine or di-n-eicosylamine.

8. The copolymer according to any of the preceding claims, wherein the molar ratio of dialkylamine (E) based on incorporated units of the dicarboxylic acid (A) in the copolymer is at least 1.2:1 and up to 2.0:1.

9. The copolymer according to any of the preceding claims having a weight-average molecular weight (M_{w}) of 2000 to 20 000 (determined by gel permeation chromatography).

10. A process for preparing copolymers according to any of the preceding claims by solvent polymerization, emulsion polymerization, precipitation polymerization or bulk polymerization at polymerization temperatures of 50 to 250°C in apparatuses operated continuously or batchwise, followed by the reaction with at least one dialkylamine (E), where the two alkyl radicals in the at least one dialkylamine (E) are independently alkyl radicals having at least 17 up to 30 carbon atoms.

11. The use of the copolymer according to any of claims 1 to 9 for reducing the crystallization of paraffin crystals in fuels.

12. The use of the copolymer according to any of claims 1 to 9 for improving the cold flow properties of fuel oils and for improving the filterability of fuel oils comprising cold flow improver additives.

13. A fuel oil comprising 10 to 5000 ppm by weight of at least one copolymer according to any of claims 1 to 9 and additionally optionally further additives selected from the group consisting of cold flow improvers, paraffin dispersants, conductivity improvers, anticorrosion additives, lubricity additives, antioxidants, metal deactivators, antifoams, demulsifiers, detergents, cetane number improvers, solvents or diluents, dyes and fragrances.

## Revendications

1. Copolymère pouvant être obtenu par copolymérisation de
(A) au moins un acide dicarboxylique insaturé ou ses dérivés,
(B) au moins une α-oléfine contenant d'au moins 6 à 20 atomes de carbone inclus,
(C) au moins un ester alkylique en C₃ à C₂₀ de l'acide acrylique ou de l'acide méthacrylique ou un mélange de tels esters alkyliques, et
(D) éventuellement un ou plusieurs monomères copolymérisables supplémentaires, qui sont différents des monomères (A), (B) et (C),
suivie par la mise en réaction avec au moins une dialkylamine (E), les deux radicaux alkyle de ladite au moins une dialkylamine (E) consistant indépendamment l'un de l'autre en des radicaux alkyle comprenant au moins 17 à 30 atomes de carbone.

2. Copolymère selon la revendication 1, **caractérisé en ce que** le monomère (A) est choisi dans le groupe constitué par l'acide maléique, l'acide fumarique, l'acide 2-méthylmaléique, l'acide 2,3-diméthylmaléique, l'acide 2-méthylfumarique, l'acide 2,3-diméthylfumarique, l'acide méthylène-malonique et l'acide tétrahydrophtalique et leurs dérivés.

3. Copolymère selon la revendication 1 ou 2, **caractérisé en ce que** le monomère (B) est choisi dans le groupe constitué par le 1-hexène, le 1-heptène, le 1-octène, le 1-nonène, le 1-décène, le 1-undécène, le 1-dodécène, le 1-tridécène, le 1-tétradécène, le 1-pentadécène, le 1-hexadécène, le 1-heptadécène, le 1-octadécène, le 1-nonadécène et le 1-eicosène.

4. Copolymère selon l'une quelconque des revendications précédentes, **caractérisé en ce que** le monomère (C) est choisi dans le groupe constitué par les esters de l'acide acrylique et méthacrylique avec du n-propanol, de l'iso-propanol, du n-butanol, du sec.-butanol, de l'isobutanol, du tert.-butanol, du n-pentanol, du tert.-pentanol, du n-hexanol, du n-heptanol, du n-octanol, du 2-éthylhexanol, du n-nonanol, de l'isononanol, du n-décanol, du 2-propylheptanol, du n-undécanol, de l'iso-undécanol, du n-dodécanol, du n-tridécanol, de l'isotridécanol, du 3,3,5,5,7-pentaméthyloctanol, du n-tétradécanol, du n-pentadécanol, du n-hexadécanol, du n-heptadécanol, de l'iso-heptadécanol, du 3,3,5,5,7,7,9-heptaméthyldécanol, du n-octadécanol et du n-eicosanol.

5. Copolymère selon l'une quelconque des revendications précédentes, **caractérisé en ce que** le monomère éventuel (D) est choisi dans le groupe constitué par les (méth)acrylates cycloaliphatiques (D1), les (méth)acrylates d'éthers monoalkyliques de polyalkylène glycol (D2), les alcanoates de vinyle (D3), les composés d'allyle (D4), les éthers de vinyle (D5), les N-vinyllactames (D6), les N-vinylimidazoles (D7), les composés aromatiques éthyléniquement insaturés (D8), le dioxyde de soufre (D9) et les nitriles éthyléniquement insaturés (D10).

6. Copolymère selon l'une quelconque des revendications précédentes, **caractérisé en ce que** les monomères sous forme copolymérisée présentent un rapport molaire d'incorporation de (A):(B):(C):(D) de 1:0,5 à 2,0:0,5 à 2,0:0 à 0,1.

7. Copolymère selon l'une quelconque des revendications précédentes, **caractérisé en ce que** la dialkylamine (E) consiste en la di-n-octadécylamine, la di-n-nonadécylamine ou la di-n-eicosylamine.

8. Copolymère selon l'une quelconque des revendications précédentes, **caractérisé en ce que** le rapport molaire de la dialkylamine (E) par rapport aux unités incorporées de l'acide dicarboxylique (A) dans le copolymère est d'au moins 1,2:1 à 2,0:1.

9. Copolymère selon l'une quelconque des revendications précédentes ayant un poids moléculaire moyen en poids (M_{w}) de 2 000 à 20 000 (déterminé par chromatographie par perméation de gel).

10. Procédé de fabrication de copolymères selon l'une quelconque des revendications précédentes par polymérisation en solvant, polymérisation en émulsion, polymérisation par précipitation ou polymérisation en masse à des températures de polymérisation de 50 à 250 °C dans des appareils exploités de manière continue ou discontinue, suivie par la mise en réaction avec au moins une dialkylamine (E), les deux radicaux alkyle de ladite au moins une dialkylamine (E) consistant indépendamment l'un de l'autre en des radicaux alkyle comprenant au moins 17 à 30 atomes de carbone.

11. Utilisation du copolymère selon l'une quelconque des revendications 1 à 9 pour réduire la cristallisation de cristaux de paraffine dans des carburants.

12. Utilisation du copolymère selon l'une quelconque des revendications 1 à 9 pour améliorer les propriétés d'écoulement à froid d'huiles combustibles et pour améliorer la filtrabilité d'huiles combustibles contenant des additifs d'amélioration de l'écoulement à froid.

13. Huile combustible, contenant 10 à 5 000 ppm en poids d'au moins un copolymère selon l'une quelconque des revendications 1 à 9 et en outre éventuellement des additifs supplémentaires choisis dans le groupe constitué par les agents d'amélioration de l'écoulement à froid, les dispersants de paraffines, les agents d'amélioration de la conductivité, les additifs anticorrosion, les additifs de lubrification, les antioxydants, les désactivateurs de métaux, les agents antimousse, les désémulsifiants, les détergents, les agents d'amélioration de l'indice de cétane, les solvants ou diluants, les colorants et les parfums.
